# EUROPÄISCHE PATENTSCHRIFT

(11) **EP 0 642 396 B1**
(45) Veröffentlichungstag und Bekanntmachung des Hinweises auf die Patenterteilung: **05.03.1997**
(21) Anmeldenummer: 94911059.7
(22) Anmeldetag: 19.03.1994
(51) Int. Cl.: B23Q 1/28, B25B 5/06, F15B 15/10

(54) **FLUIDISCH BETÄTIGBARES, LEISTENARTIGES KLEMMWERKZEUG**
FLUIDICALLY ACTUATED BAR-LIKE CLAMPING TOOL
OUTIL ALLONGE DE SERRAGE A ACTIONNEMENT FLUIDE

(30) Priorität: 26.03.1993 DE 9304652 U
(43) Veröffentlichungstag der Anmeldung: 15.03.1995
(73) Patentinhaber: KUHNKE GmbH, D-23714 Malente (DE)
(72) Erfinder: DITTRICH, Gerhard, D-24306 Plön (DE); BEBEN, Marius, D-23701 Eutin (DE); MEHLERT, Wolfgang, D-23701 Röbel (DE)
(74) Vertreter: Wilcken, Thomas, Dipl.-Ing.
(86) Internationale Anmeldenummer: DE9400318
(87) Internationale Veröffentlichungsnummer: WO9422638

(56) Entgegenhaltungen:
- DE-A- 2 229 821
- FR-A- 2 392 261
- SU-A- 495 271
- US-A- 3 010 698

## Beschreibung

Die Erfindung geht aus von einem fluidisch betätigbaren, leistenartigen Klemmwerkzeug nach dem Oberbegriff des Anspruchs 1.

Ein derartiges Klemmwerkzeug ist aus der FR-Offenlegungsschrift 2 125 216 bekannt. Es besteht aus einer länglichen Grundplatte, auf der ein längeres, gerades Schlauchstück liegt, das an seinen eigenen und an beiden Enden der Grundplatte mittels plattenförmiger Querstücke und Schrauben befestigt ist. Auf seiner Oberseite ist das Schlauchstuck mit einem länglichen Klemmkörper versehen, der gegen ein Werkstuck zur Anlage kommt. An seinem einen Ende weist das Schlauchstück einen Fluidanschluß auf. Wenn das Schlauchstück aufgeblasen wird, hebt sich der Klemmkörper und drückt gegen das Werkstück, das z.B. angehoben werden soll. Mit diesem Werkzeug kann nur eine begrenzte Hubkraft erzeugt werden, und ferner ist das Werkzeug im Verhältnis zur Größe seiner Kraftentfaltung ein relativ großbauendes Werkzeug.

Des weiteren ist in einer anderen FR-Offenlegungsschrift 2 220 701 ein Klemmwerkzeug beschrieben, bei dem mittels eines schlauchförmigen Expansionskörpers ein plattenförmiger Klemmkörper von einem ebenfalls plattenförmigen Grundkörper weggedruckt wird, so daß der Klemmkörper gegen ein Werkstück zur Anlage kommt und letzteres dadurch eingespannt wird. Zur Erzeugung einer erhöhten Klemmkraft ist das Werkzeug derart ausgebildet, daß der Grundkörper mehrere zueinander parallele Stützrippen und der Klemmkörper mehrere zueinander parallele Drückrippen aufweist, wobei die Rippen beider Körper kammartig ineinander greifen. Der schlauchförmige Expansionskörper ist dabei serpentinenartig so zwischen den Rippen beider Körper geführt, daß er den Klemmkörper vom Grundkörper wegdrückt, wenn er mit Druckfluid versehen wird. Die mehrfachen Serpentinenabschnitte des Expansionskörpers entfalten eine dementsprechend mehrfache Kraftentfaltung und übertragen diese Kraft auf den Klemmkörper. Da dieses Werkzeug außerordentlich hohe Kräfte entfalten soll, weil es beispielsweise für Schraubstockzwecke eingesetzt wird, ist es ebenfalls von einer voluminösen Baugröße und benötigt demgemäß einen entsprechend großen Aufstellplatz und ist aufgrund seiner komplizierten Form mit entsprechenden Herstellungskosten belastet.

Die Aufgabe der Erfindung besteht darin, ein fluidisch betätigbares, leistenartiges Klemmwerkzeug der einleitend angeführten Art so zu verbessern, daß es zu seinen im Verhältnis kleinen volumenmäßigen Abmessungen größtmögliche Klemmkräfte entfalten kann sowie einfach aufgebaut und kostengünstig herstellbar ist.

Die Lösung dieser Aufgabe geht von dem einleitend angeführten fluidisch betätigbaren, leistenartigen Klemmwerkzeug aus und kennzeichnet sich weiter dadurch, daß der Grundkörper und der Klemmkörper je aus einem U-Profilstück mit ineinandergreifenden Schenkeln bestehen, daß in dem Grundkörper zwischen seinen Schenkeln ein längliches, hubbewegliches, an den Schenkelenden des Klemmkörpers anliegendes Druckstück und ein ortsfestes, längliches Widerlager vorgesehen sind, daß sich der schlauchförmige Expansionskörper einerseits zwischen dem Grundkörper und dem Druckstück und nach seiner Umlenkung andererseits zwischen dem Widerlager und dem Klemmkörper erstreckt und daß der U-förmige Grundkörper wenigstens an seinem den Fluidanschluß aufweisenden Ende eine Abschlußeinrichtung aufweist.

Durch diese Lösung ist ein Klemmwerkzeug in Form einer Spannleiste geschaffen, die kompakt im Aufbau ist und im Verhältnis dazu eine sehr große Klemmkraft entfalten kann. Das Werkzeug ist ferner mit wenigen und einfachen Bauteilen herstellbar, so daß es auch kostengünstig hergestellt werden kann. Die große Kraftentfaltung auch bei einer solchen Klemmleiste erklärt sich aufgrund des langen, schlauchförmigen Expansionskörpers, der nach seiner Umlenkung um 180° sich wiederum im wesentlichen über die Länge der Spannleiste zurückerstreckt, so daß eine doppelte Kraft von dem fluidisch beaufschlagten Expansionskörper auf den Klemmkörper ausgeübt wird. Darüber hinaus ist das erfindungsgemäße Klemmwerkzeug aufgrund seiner Leistenform vielseitig einsetzbar. Letzteres ist auch dadurch begründet, daß das Werkzeug äußerlich im Querschnitt keine unnötigen Ecken und Kanten aufweist, weil die ineinandergreifenden U-Körper eine praktische Quadrat- oder Rechteckform bilden.

In einer vorteilhaften Ausgestaltung des erfindungsgemäßen Klemmwerkzeuges ist das Widerlager als sich über die Länge des Klemmkörpers und parallel zum Grundkörper erstreckende Querwand ausgebildet und zwischen den beiden langen Seitenrändern der Querwand und den beiden, diesen Rändern gegenüberliegenden Schenkeln des Grundkörpers ist je ein Schlitz zum Führen der Schenkel des Klemmkörpers ausgebildet. Hierbei weist das Druckstück vorteilhaft wenigstens einen Führungszapfen auf, der in einem Führungsloch der Querwand gleitet. Durch diese Ausbildung führen das Druckstück und der Klemmkörper eine sichere Hubbewegung aus und der Expansionskörper kann seine volle Expansionskraft entfalten.

Die Erfindung ist nachstehend anhand eines in der Zeichnung dargestellten Ausführungsbeispieles näher erläutert. Es zeigen:
- Figur 1: eine Seitenansicht des Ausführungsbeispiels,
- Figur 2: eine Endansicht auf das Beispiel nach Figur 1,
- Figur 3: einen Längsschnitt nach der Linie A-A in Figur 2, und
- Figur 4: einen Querschnitt nach der Linie B-B in Figur 1, wobei einmal die Grundstellung und zum anderen die Hubstellung des Klemmkörpers gezeigt ist.

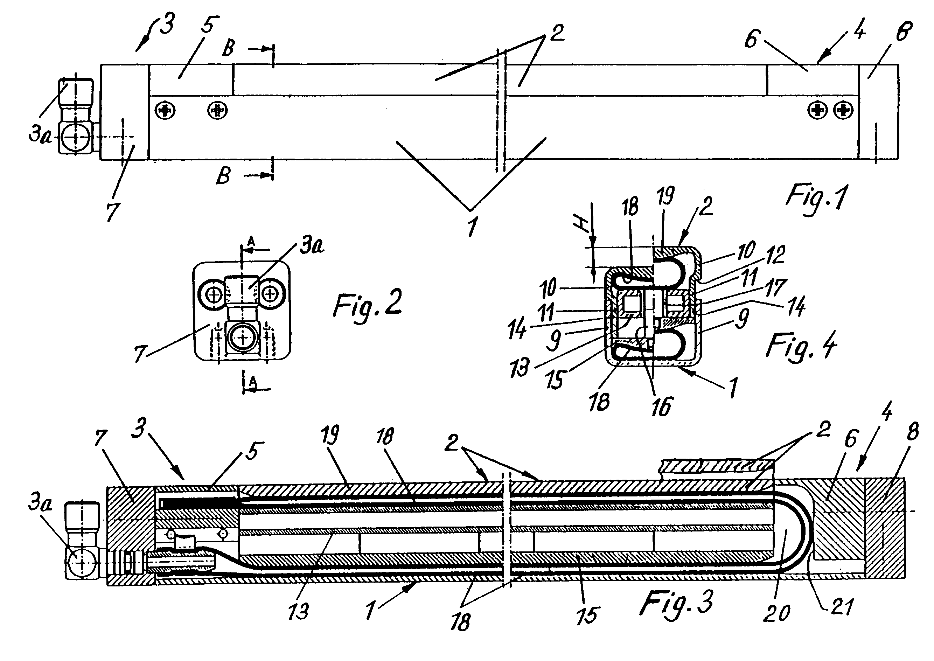

Nach den Figuren 1 und 4 besteht das Ausführungsbeispiel hauptsächlich aus einem länglichen Grundkörper 1 in Form eines U-Profilstuckes, einem Klemmkörper 2 ebenfalls in Form eines U-Profilstückes, wobei der Klemmkörper jedoch kürzer ist als der Grundkörper, und zwei an den Enden der Grundkörper vorgesehenen Abschlußeinrichtungen 3 und 4, mit denen die Grundkörper 1 und 2 nach außen abgeschlossen sind, wobei die eine Abschlußeinrichtung 3 einen Fluidanschluß 3a aufweist. Jede Abschlußeinrichtung 3, 4 besteht aus einem Einsatzstück 5 bzw. 6, mit dem der Grundkörper 1 verschraubt ist, und aus einem Abschlußdeckel 7 bzw. 8, der wiederum an dem betreffenden Einsatzstück angeschraubt ist. Obwohl es vorteilhaft ist, zwei Abschlußeinrichtungen vorzusehen, kann auch so vorgegangen werden, daß nur die Abschlußeinrichtung 7 mit dem Fluidanschluß 3a vorgesehen ist. Wie insbesondere aus Figur 4 ersichtlich ist, greifen der Grundkörper 1 und der Klemmkörper 2 mit ihren Schenkeln ineinander, so daß das Klemmwerkzeug eine formschöne Klemmleiste bildet, die im Querschnitt eine Quadrat- oder Rechteckform darstellt.

Während der Grundkörper 1 im Querschnitt eine einfache U-Form aufweist, so daß seine Schenkel 9 geradlinig verlaufen, weisen die Schenkel 10 des Klemmkörpers 2 einen zurückspringenden Eingreifabschnitt 11 auf, wobei diese zurückspringenden Abschnitte 11 innen an den Schenkeln 9 des Grundkörpers 1 entlanggleiten. Die Schenkel 10 des Klemmkörpers 2 weisen je eine Anschlagschulter 12 auf, die gegen das freie Ende der Schenkel 9 des Grundkörpers 1 zur Anlage kommen, wodurch die Ausgangsstellung des Klemmkörpers 2 bestimmt ist.

Innerhalb des Grundkörpers 1 ist ein längliches Widerlager 13 vorgesehen, das in bezug auf den Grundkörper 1 ortsfest angeordnet ist, beispielsweise dadurch, daß es an dem Einsatzstück 5 der Abschlußeinrichtung 3 montiert ist, und das sich über die Länge des Klemmkörpers 1 erstreckt, wie es aus Figur 3 deutlich zu erkennen ist. Das Widerlager erstreckt sich des weiteren parallel zu den Körpern 1 und 2 und ist etwa im Bereich der Enden des Schenkels 9 des Grundkörpers 1 vorgesehen, um genügend Raum für eine den Klemmkörper 1 betätigende Einrichtung zu schaffen (Figur 4). Das Widerlager 13 ist als längliche Querwand ausgebildet, und zwar derart, daß zwischen seinen beiden langen Seitenrändern und den Endbereichen der Schenkel 9 des Grundkörpers 1 Schlitze 14 ausgebildet sind, die je eine Breite aufweisen, die der Dicke der Eingreifabschnitte 11 der Schenkel 12 des Klemmkörpers 2 entspricht. Dadurch wird der Klemmkörper 2 sicher in seiner Hubewegung geführt. Des weiteren ist unterhalb des Widerlagers bzw. der Querwand 13 ein loses Druckstück 15 vorgesehen, das sich ebenfalls über die Lange des Klemmkörpers 2 erstreckt und eine Kraft, die auf das Druckstück ausgeübt wird, auf die Enden der Schenkel 12 des Klemmkörpers 2 überträgt, wie es aus Figur 4 ersichtlich ist. Um das Druckstück 15 z.B. gegen Bewegung in seiner Längsrichtung zu schützen, kann es mit wenigstens einem Führungszapfen 16 versehen sein, der in einem Führungsloch 17 der Querwand 13 lose gleitet.

Des weiteren ist ein schlauchförmiger Expansionskörper 18 vorgesehen, der sich von der Abschlußeinrichtung 3 mit dem Fluidanschluß 3a zunächst unterhalb des Druckstückes 15 bis zum anderen Endbereich der Körper 1 und 2 erstreckt und sich dann unter Umlenkung um 180° wieder bis zur Abschlußeinrichtung 3 zurückerstreckt, und zwar in einem Raum oberhalb des Widerlagers 13 und unterhalb des Steges 19 des Klemmkörpers 2. Der Expansionskörper 18 liegt somit an dem Druckstück 15 und an dem Klemmkörper 2 an. Wenn der Expansionskörper über den Anschluß 3a mit Druckfluid beaufschlagt wird, werden somit sowohl das Druckstück 15 als auch der Steg 19 des Klemmkörpers 2 mit einer Druckkraft versehen, wobei das Druckstück seine Kraft ebenfalls auf den Klemmkörper überträgt. Dieser wird daher mit einer doppelten Kraft beaufschlagt. Der Hubweg H des Klemmkörpers 2 wird durch die Anlage des Druckstückes 15 gegen die Unterseite des Widerlagers 13 begrenzt. Im Umlenkungsbereich des schlauchförmigen Expansionskörpers 18 ist ein Raum 20 vorgesehen, der Dehnungsänderungen des Expansionskörpers ausgleicht. Um ein sicheres Einfließen von Druckfluid in den zurückverlaufenden Abschnitt des Expansionskörpers zu gewährleisten, kann das Einsatzstück 6 eine Anlagefläche 21 aufweisen, die eine Knickung des Expansionskörpers an seiner Umlenkstelle vermeidet.

Die Funktion des beschriebenen Ausführungsbeispiels geht aus der vorstehenden Beschreibung und aus den gezeigten Figuren für den Fachmann klar hervor. Hierzu zeigt Figur 3 andeutungsweise in teilweiser Darstellung die angehobene Stellung des Klemmkörpers 2, die seine Arbeitsstellung darstellt.

## Patentansprüche

1. Fluidisch betätigbares, leistenartiges Klemmwerkzeug mit einem länglichen Grundkörper (1), einem zu diesem hubbeweglichen, länglichen Klemmkörper (2) und einem zwischen diesen beiden Körpern angeordneten schlauchförmigen Expansionskörper zum Bewegen des Klemmkörpers, wobei der Expansionskörper (18) an einem Ende fluiddicht befestigt ist und an seinem anderen Ende an einen Fluidanschluß angeschlossen ist, dadurch gekennzeichnet, daß der Grundkörper (1) und der Klemmkörper (2) je aus einem U-Profilstück mit ineinander greifenden Schenkeln (9; 10) bestehen, daß in dem Grundkörper (1) zwischen seinen Schenkein (9) ein längliches, hubbewegliches, an den Schenkelenden des Klemmkörpers (2) anliegendes Druckstück (15) und ein ortsfestes, längliches Widerlager (13) vorgesehen sind, daß sich der schlauchförmige Expansionskörper (18) einerseits zwischen dem Grundkörper (1) und dem Druckstück (15) und nach seiner Umlenkung andererseits zwischen dem Widerlager (13) und dem Klemmkörper (2) erstreckt und daß der U-förmige Grundkörper (1) wenigstens an seinem den Fluidanschluß (3a) aufweisenden Ende eine Abschlußeinrichtung (3) aufweist.

2. Klemmwerkzeug nach Anspruch 1, dadurch gekennzeichnet, daß das Widerlager (13) als sich über die Länge des Klemmkörpers (2) und parallel zum Grundkörper (1) erstreckende Querwand ausgebildet ist und daß zwischen den beiden langen Seitenrändern der Querwand und den beiden, diesen Rändern gegenüberliegenden Schenkeln (9) des Grundkörpers (1) je ein Schlitz (14) zum Führen der Schenkel (12) des Klemmkörpers (2) ausgebildet ist.

3. Klemmwerkzeug nach Anspruch 1 oder 2, dadurch gekennzeichnet, daß das Druckstück (15) wenigstens einen Führungszapfen (16) aufweist, der in einem Führungsloch (17) der Querwand (13) gleitet.

4. Klemmwerkzeug nach Anspruch 1, 2 oder 3, dadurch gekennzeichnet, daß die beiden endseitigen Abschlußeinrichtungen (3, 4) des Grundkörpers (1) je aus einem an dem Grundkörper befestigten Einsatzstück (5, 6) und aus einem mit jedem Einsatzstück verbundenen Abschlußdeckel (7, 8) bestehen.

5. Klemmwerkzeug nach einem der Ansprüche 1 bis 4, dadurch gekennzeichnet, daß die in den U-förmigen Grundkörper (1) eingreifenden Schenkel (12) des U-förmigen Klemmkörpers (2) entlang ihres Eingreifabschnittes (11) zurückspringend ausgebildet sind und je eine Anschlagschulter (12) aufweisen, die gegen das freie Ende der Schenkel (9) des Grundkörpers (1) zur Anlage kommen.

6. Klemmwerkzeug nach einem der Ansprüche 1 bis 5, dadurch gekennzeichnet, daß die Abschlußeinrichtung (4) im Bereich der Umlenkstelle des Expansionskörpers (18) eine Anlagefläche (21) für den Umlenkbereich des Expansionskörpers aufweist.

## Claims

1. A hydraulically actuated, bar-like clamping tool, comprising an elongate base body (1), an elongate clamping body (2) which can be moved in a reciprocating fashion to said base body, and arranged between these two bodies, a tubular expansion body for moving the clamping body, said expansion body (18) being fastened at one end in a fluid-tight manner and at its other end being connected to a fluid connection, characterised in that the base body (1) and the clamping body (2) each consist of a U-profiled section having legs (9, 10) meshing with each other, that in the base body (1) between its legs (9) there is provided an elongate, reciprocating thrust piece (15) that is adjacent to the ends of the legs of the clamping body (2), and a stationary, elongate abutment (13), that the tubular expansion body (18) extends on the one hand between the base body (1) and the thrust piece (15) and, after it is deflected, between the abutment (13) and the clamping body (2) on the other hand, and that the U-shaped base body (1), at least at its end comprising the fluid connection (3a), comprises a shut-off device (3).

2. A clamping tool according to claim 1, characterised in that the abutment (13) is formed as a transverse wall extending over the length of the clamping body (2) and parallel to the base body (1), and that between the two long side edges of the transverse wall and the two legs (9) of the base body (1) lying opposite these edges there is each formed a slot (14) for guiding the leg (12) of the clamping body (2).

3. A clamping tool according to claim 1 or 2, characterised in that the thrust piece (15) comprises at least one guiding pin (16) which slides in a guiding hole (17) of the transverse wall (13).

4. A clamping tool according to claims 1, 2 or 3, characterised in that both end side shut-off devices (3, 4) of the base body (1) each consist of an insert piece (5, 6) fixed to the base body and a shut-off cover (7, 8) attached to each insert piece.

5. A clamping tool according to one of claims 1 to 4, characterised in that the legs (12) of the U-shaped clamping body (2) meshing into the U-shaped base body (1) along its meshing section (11) are formed in a set-back manner and each comprise an abutment shoulder (12) which comes to rest against the free end of the leg (9) of the base body (1).

6. A clamping tool according to one of claims 1 to 5, characterised in that the shut-off device (4) in the region of the deflection location of the expansion body (18), comprises a contact surface (21) for the deflection location of the expansion body.

## Revendications

1. Outil de serrage en forme de barre, pouvant être actionné par un fluide, comportant un corps de base (1) allongé, un corps de serrage (2) allongé et mobile selon une course de déplacement par rapport au corps de base, et un corps expansible en forme de boyau, disposé entre les deux corps précédents et destiné à déplacer le corps de serrage, le corps expansible (18) étant fixé de manière étanche aux fluides, à une extrémité, et étant relié, à son autre extrémité, à un raccord de branchement de fluide, caractérisé en ce que le corps de base (1) et le corps de serrage (2) sont constitués chacun d'une pièce profilée en U présentant des ailes (9; 10) s'engageant à l'intérieur de celles de l'autre, en ce que dans le corps de base (1), entre ses ailes (9), sont prévues une pièce de poussée (15) allongée, mobile selon une course de déplacement et s'appuyant sur les extrémités des ailes du corps de serrage (2), ainsi qu'une butée (13) allongée, en position fixe, en ce que le corps expansible (18) en forme de boyau s'étend, d'un côté, entre le corps de base (1) et la pièce de poussée (15) et, de l'autre côté, après son renvoi, entre la butée (13) et le corps de serrage (2), et en ce que le corps de base (1) en forme de U comporte, au moins à son extrémité présentant le raccord de branchement de fluide (3a), un dispositif de fermeture (3).

2. Outil de serrage selon la revendication 1, caractérisé en ce que la butée (13) est réalisée sous la forme d'une paroi transversale s'étendant sur la longueur du corps de serrage (2) et parallèlement au corps de base (1), et en ce qu'entre les deux longs bords latéraux de la paroi transversale et chacune des deux ailes (9) du corps de base (1), en regard de ces bords, est formée une fente (14) destinée au guidage des ailes (10) du corps de serrage (2).

3. Outil de serrage selon la revendication 1 ou 2, caractérisé en ce que la pièce de poussée (15) comporte au moins un tenon de guidage (16) glissant dans un trou de guidage (17) de la paroi transversale (13).

4. Outil de serrage selon la revendication 1, 2 ou 3, caractérisé en ce que les deux dispositifs de fermeture (3, 4) d'extrémité du corps de base (1) sont constitués chacun d'une pièce d'insert (5, 6), fixée au corps de base, et d'un couvercle (7, 8) relié à chaque pièce d'insert.

5. Outil de serrage selon l'une des revendications 1 à 4, caractérisé en ce que les ailes (10) du corps de serrage (2) en forme de U, s'engageant dans le corps de base (1) en forme de U, sont formées en retrait le long de leur tronçon d'engagement (11), et comportent chacune un épaulement de butée (12), qui vient en appui contre l'extrémité libre des ailes (9) du corps de base (1).

6. Outil de serrage selon l'une des revendications 1 à 5, caractérisé en ce que le dispositif de fermeture (4) comporte, dans la région du renvoi du corps expansible (18), une surface d'appui (21) pour la zone de renvoi du corps expansible.
